# EUROPÄISCHE PATENTANMELDUNG

(11) **EP 4 117 226 A1**
(43) Veröffentlichungstag der Anmeldung: **11.01.2023**
(21) Anmeldenummer: 21183762.0
(22) Anmeldetag: 05.07.2021
(51) Int. Cl.: H04L 9/32

(54) **VERFAHREN ZUR OPTIMIERUNG EINER ZERTIFIKATSVERWALTUNG UND SYSTEM**

(71) Anmelder: Siemens Aktiengesellschaft, 80333 München (DE)
(72) Erfinder: Palmin, Anna, 76187 Karlsruhe (DE); Pauly, Oswin, 76327 Pfinztal (DE); Rogge, Benjamin, 76199 Karlsruhe (DE); Xie, Xin, 76448 Durmersheim (DE)

(57) **Zusammenfassung**

Um eine Zertifikatsverwaltung zu optimieren wird vorgeschlagen bei einem Kommunikationsvorgang (2) zwischen einem Netzwerkteilnehmer (A1) einer ersten Klasse (A) zu einem Netzwerkteilnehmer (B1) einer zweiten Klasse (B) im Rahmen einer Validierung des Zertifikates für die sichere Datenübertragung
- einen Erkennungsschritt (E) durchzuführen, bei welchem für ein Zertifikat (CB1) des Netzwerkteilnehmers (B1) der zweiten Klasse (B) erkannt wird, welche Restlaufzeit (RLZ) von einer ursprünglich ausgestellten Laufzeit (MHB) für das Zertifikat (CB1) des Netzwerkteilnehmers (B1) der zweiten Klasse (B) bezogen auf eine Uhrzeit einer Uhr (RTC) noch vorhanden ist.

## Beschreibung

Die Erfindung betrifft ein Verfahren zur Optimierung einer Zertifikatsverwaltung in einer Netzwerkinfrastruktur mit einer ersten Klasse von Netzwerkteilnehmern und einer zweiten Klasse von Netzwerkteilnehmern, wobei die erste Klasse von Netzwerkteilnehmern mit einer Zeitsynchronisierung zu einer Uhrzeit einer Uhr und die zweite Klasse von Netzwerkteilnehmern ohne eine Zeitsynchronisierung betrieben werden, wobei weiterhin zwischen den Netzwerkteilnehmern mittels eines Protokolls unter Verwendung von Zertifikaten zur sicheren Datenübertragung kommuniziert wird, und dabei auch die Gültigkeit eines Zertifikates geprüft wird.

Des Weiteren betrifft die Erfindung ein System, umfassend eine Netzwerkinfrastruktur mit einer ersten Klasse von Netzwerkteilnehmern und einer zweiten Klasse von Netzwerkteilnehmern, wobei die erste Klasse von Netzwerkteilnehmern mit Mitteln für eine Zeitsynchronisierung zu einer Uhrzeit einer Uhr und die zweite Klasse von Netzwerkteilnehmern ohne Mittel für eine Zeitsynchronisierung ausgestaltet sind, wobei die Netzwerkteilnehmer ausgestaltet sind, mittels eines Protokolls unter Verwendung von Zertifikaten einen sicheren Kommunikationsvorgang aufzubauen, weiterhin ausgestaltet auch die Gültigkeit eines Zertifikates zu prüfen.

Im Sinne der Erfindung können Zertifikate nach dem X.509 Standard verwendet werden. Begründung: Zertifikatsbasierte sichere Protokolle dienen zu unterschiedlichen Zwecken, z.B. kann ein sicheres Kommunikationsprotokoll nur zum Zwecke der Datenauthentifizierung eingesetzt werden, ohne dass eine Verschlüsselung dabei mitberücksichtigt wird. Dies ist der Fall, wenn eine Authentizität der Daten wichtig ist und deren Vertraulichkeit eher nicht wichtig ist. Aber auch eine Verschlüsselung gegen ein Mitlesen ist denkbar.

Da insbesondere in industriellen Anlagen und deren Netzwerkstruktur nicht damit gerechnet werden kann, dass alle Anlagenkomponenten bzw. die einzelnen Automatisierungskomponenten bis tief in die Feldebene hinein mit einer zuverlässigen Zeitsynchronisation ausgestattet sind, können diejenigen Automatisierungskomponenten, welche nicht mit einer Zeitsynchronisation ausgestattet sind, nicht selbstständig ein für eine Kommunikation notwendiges Verschlüsselungszertifikat auf einen Ablauf hin prüfen.

Da eine zunehmende Vernetzung und Anbindung von Automatisierungssystemen an öffentliche Netze bedingt, dass aus IT-Umgebungen (IT = Information Technology) bekannte Security Maßnahmen auch in OT-Umgebungen (OT = Operational Technology) Einzug halten. Unter OT ist Hardware und Software, die durch die direkte Überwachung und/oder Kontrolle von physikalischen Geräten, Prozessen und Ereignissen im Unternehmen eine Änderung erkennen oder verursachen, zu verstehen. Kennzeichnend für eine OT-Umgebung ist ein in sich geschlossenes System, das über keinen zentralen Punkt verfügt bzw. über keinen zentralen Punkt, welcher immer über alle für das geschlossene System relevanten Informationen verfügt. In einer IT-Umgebung hingegen existiert in der Regel ein zentraler für alle Komponenten und/oder Kommunikationspartner erreichbarer Punkt.

Eine wesentliche Komponente bezüglich Sicherheit sind in IT-Umgebungen genauso wie in OT-Umgebungen die digitalen Zertifikate nach dem X.509-Standard, mit denen sich die Kommunikationspartner, insbesondere Steuergeräte, IoT-Geräte und Speicherprogrammierbare Steuerung, gegenseitig authentifizieren können.

Dabei ist es wichtig zu wissen, ob das Zertifikat, das die Gegenstelle zur Authentisierung verwendet, gültig und vertrauenswürdig ist, oder ob das Zertifikat insbesondere auf Grund eines Sicherheitsvorfalls von der ausstellenden Instanz, insbesondere einer Certification Authority (CA), zurückgezogen wurde und somit nicht mehr vertrauenswürdig ist. Eine Prüfung des Status eines Zertifikats ist ein obligatorischer Schritt im Rahmen der Zertifikatsvalidierung gemäß gängigen sicheren Kommunikationsverfahren, insbesondere TLS. Ferner kann es auch aus anderen Gründen interessant sein, zu wissen, wenn ein Zertifikat durch ein anderes ersetzt wurde und das bisherige, ersetzte Zertifikat deshalb nicht mehr in Verwendung sein sollte.

Bei Feldgeräten oder anderen ressourcenarmen Geräten ohne eine genaue Uhrzeit kann es passieren, dass Zertifikate solcher Komponenten ablaufen, ohne dass deren Erneuerung rechtzeitig angestoßen wurde, was zu Kommunikationsproblemen oder Kommunikationsunterbrechungen führt und somit den Normalbetrieb und die Verfügbarkeit einer industriellen Anlage gefährdet.

Es ist Aufgabe der vorliegenden Erfindung ein optimiertes, automatisiertes Zertifikatsverwaltungsverfahren für Komponenten, ohne eine eigenständige Zeitsynchronisierung zur Verfügung zu stellen.

Die Aufgabe wird für das eingangs genannte Verfahren dadurch gelöst, dass bei einen Kommunikationsvorgang zwischen einem Netzwerkteilnehmer der ersten Klasse zu einem Netzwerkteilnehmer der zweiten Klasse im Rahmen einer Validierung des Zertifikats für die sichere Datenübertragung ein Erkennungsschritt durchgeführt wird, bei welchem für das Zertifikat des Netzwerkteilnehmers der zweiten Klasse erkannt wird, welche Restlaufzeit von einer ursprünglich ausgestellten Laufzeit für das Zertifikat des Netzwerkteilnehmers der zweiten Klasse bezogen auf die Uhrzeit der Uhr noch vorhanden ist, die ermittelte Restlaufzeit wird mit einem vorgebbaren Wert verglichen, und sollte der Vergleich ergeben, dass der vorgegebene Wert erreicht ist, wird in einem weiteren Schritt eine Benachrichtigung abgesetzt, welche einen Netzbetreiber über das baldige Ablaufen des Zertifikates informiert, oder eine Zertifikatserneuerungsanfrage an eine Zertifizierungsstelle abgesetzt wird.

Anlagenstillstände oder Unterbrechungen durch vergessene oder abgelaufene Zertifikate können sehr kostspielig und schädlich für einen laufenden Betrieb sein.

Erfindungsgemäß wird nun ermöglicht, dass wenn eine zeitsynchronisierte Anlagenkomponente bzw. ein Netzwerkteilnehmer mit einer nicht zeitsynchronisierten Komponente bzw. Netzwerkteilnehmer eine Verbindung aufbaut und dabei feststellt, dass für den sicheren Verbindungsaufbau dieses Zertifikats innerhalb einer bestimmten, vorkonfigurierten Zeitspanne abläuft, nun die Anlagenkomponente mit der Zeitsynchronisation stellvertretend für die Anlagenkomponente ohne die Zeitsynchronisation, das Ablaufen eines Zertifikates prüft. Weiterhin übernimmt die Anlagenkomponente mit der Zeitsynchronisation das Auslösen einer Benachrichtigung an einen Netzbetreiber, welcher wiederum eine Zertifikatserneuerung anstoßen kann. Somit entfällt auf vorteilhafte Art und Weise die Notwendigkeit, die Zertifikate der Anlagenkomponenten ohne Zeitsynchronisierung auf eine andere Art und Weise, beispielsweise durch dedizierte, speziell dazu definierte Kommunikationsvorgänge zu prüfen. Somit wird einer Kommunikationsunterbrechung und Gefährdung eines Normalbetriebes einer industriellen Anlage, die durch die Nichtverfügbarkeit der Informationen bzw. des Status eines Zertifikats verursacht werden könnten, vorgebeugt und zu einer höheren Anlagenverfügbarkeit beigetragen.

Vorteilhafterweise wird die Netzinfrastruktur als ein industrielles Kommunikationsnetz zwischen Automatisierungskomponenten betrieben.

Eine weitere Ausgestaltung der Erfindung ist es, dass der Erkennungsschritt als ein erster Softwaredienst auf einem Netzwerkteilnehmer der ersten Klasse betrieben wird. Es wird beispielsweise ein Dienst mit dem Namen "Zertifikat Update Notifier Service" eingeführt, welcher auf den Anlagenkomponenten bzw. Netzwerkteilnehmern der ersten Klasse mit einer Zeitsynchronisierung zu einer Uhrzeit einer Uhr abläuft. Den Netzwerkteilnehmern der ersten Klasse ist gemeinsam, dass sie mit anderen Anlagenkomponenten, wie z.B. Industrial Controller/AS, Feldgeräten, die gegebenenfalls über keine korrekte Uhrzeit verfügen, im Rahmen des Anlagenbetriebs unter Verwendung von sicheren Protokollen, kommunizieren. Dabei validieren sie beispielsweise bei jedem Kommunikationsvorgang standardmäßig (nach RFC 5280) deren Zertifikate, welche beispielsweise bei einem TLS-Handshake ausgetauscht werden. Der implementierte erste Softwaredienst "Zertifikat Update Notifier Service" wird immer dann aufgerufen, wenn eine jeweilige validierende Instanz im Rahmen der Validierung eines Zertifikates feststellt, dass das Zertifikat nach N-Tagen abläuft.

Auch ist es denkbar, dass ein Auffälligkeitsdetektions-Mittel betrieben wird, in dem der Erkennungsschritt ausgeführt wird.

Auf verschiedenen Anlagenkomponenten wie z.B. einem OS-Server, einem Industrial Anomaly Detection Tool oder einem SIEM-System könnte der Erkennungsschritt in Form des ersten Softwaredienstes ablaufen. Er validiert die Zertifikate, welche z.B. bei einem TLS-Handshake ausgetauscht werden. Ein Auffälligkeitsdetektions-Mittel wird dazu mit einer Schnittstelle zu dem Kommunikations TLS-Handshakeverfahren und mit einer zuverlässigen Uhrzeit ausgestattet.

In einer weiteren Ausgestaltung des Verfahrens wird die Zertifikatserneuerungsanfrage als ein zweiter Softwaredienst durch den ersten Softwaredienst angestoßen, wobei der zweite Softwaredienst den Netzwerkteilnehmer der zweiten Klasse auffordert, einen Erneuerungsantrag an die Zertifizierungsstelle zu stellen.

Der zweite Softwaredienst "Zertifikat Update Service" könnte beispielsweise die betroffene Komponente, deren Zertifikat bald abläuft, dazu auffordern einen Erneuerungsantrag an die Zertifizierungsstelle zu stellen.

Verfahrensgemäß wird nun mit Vorteil eine vorausschauende Zertifikatserneuerung durchgeführt und damit ein automatisiertes Zertifikatsmanagement ohne zusätzliche Kommunikation ermöglicht. Insbesondere bei industriellen Automatisierungsanlagen mit Feldgeräten ohne einen Zugang zu einer Uhrzeit ist dieses Verfahren sehr vorteilhaft, weil zusätzliche Kommunikationsverbindungen für eine Zertifikatsprüfung entfallen.

Ebenfalls wird die eingangs genannte Aufgabe bei dem eingangs genannten System dadurch gelöst, dass die Netzwerkteilnehmer der ersten Klasse ein Erkennungsmittel aufweisen, welches ausgestaltet ist, bei einem Kommunikationsvorgang zu einen Netzwerkteilnehmer der zweiten Klasse im Rahmen einer Validierung des Zertifikates für die sichere Datenübertragung einen Erkennungsschritt durchzuführen, bei welchem für das Zertifikat des Netzwerkteilnehmers der zweiten Klasse erkannt wird, welche Restlaufzeit von einer ursprünglich ausgestellten Laufzeit für das Zertifikat des Netzwerkteilnehmers der zweiten Klasse bezogen auf die Uhrzeit der Uhr noch vorhanden ist, weiterhin ausgestaltet, die ermittelte Restlaufzeit mit einem vorgebbaren Wert zu vergleichen und für den Fall, dass der Vergleich ergibt, dass der vorgegebene Wert erreicht ist, ist ein Benachrichtigungs-Mittel vorhanden, welches ausgestaltet ist, eine Benachrichtigung abzusetzen, welcher einen Netzwerkbetreiber über das baldige Ablaufen des Zertifikates informiert, oder eine Zertifikatserneuerungs-Anfrage an eine Zertifizierungsstelle absetzt.

Die Netzwerkinfrastruktur des Systems ist als ein industrielles Kommunikationsnetz zwischen Automatisierungskomponenten ausgestaltet.

Eine weitere Ausgestaltung des Systems sieht vor, dass das Erkennungsmittel als ein erster Softwaredienst ausgestaltet ist und auf den Netzwerkteilnehmern der ersten Klasse implementiert ist.

Auch ist es denkbar, in dem System ein Auffälligkeitsdetektions-Mittel zu integrieren, auf dem der Erkennungsschritt ausgeführt wird.

Bei dem System ist es auch von Vorteil, wenn ein Anfragemittel vorhanden ist, welches als ein zweiter Softwaredienst ausgestaltet ist und eine Schnittstelle zu dem ersten Softwaredienst aufweist, weiterhin ausgestaltet, den Netzwerkteilnehmer der zweiten Klasse aufzufordern einen Erneuerungsantrag an die Zertifizierungsstelle zu stellen.

Ein Ausführungsbeispiel wird mit der Zeichnung aufgezeigt, es zeigt
- FIG 1: ein System mit einer Netzwerkinfrastruktur für eine industrielle Anlage,
- FIG 2: einen ersten Netzwerkteilnehmer bei einem Kommunikationsvorgang zu einem zweiten Netzwerkteilnehmer und
- FIG 3: ein Ablaufdiagramm für eine Optimierung einer Zertifikatsverwaltung.

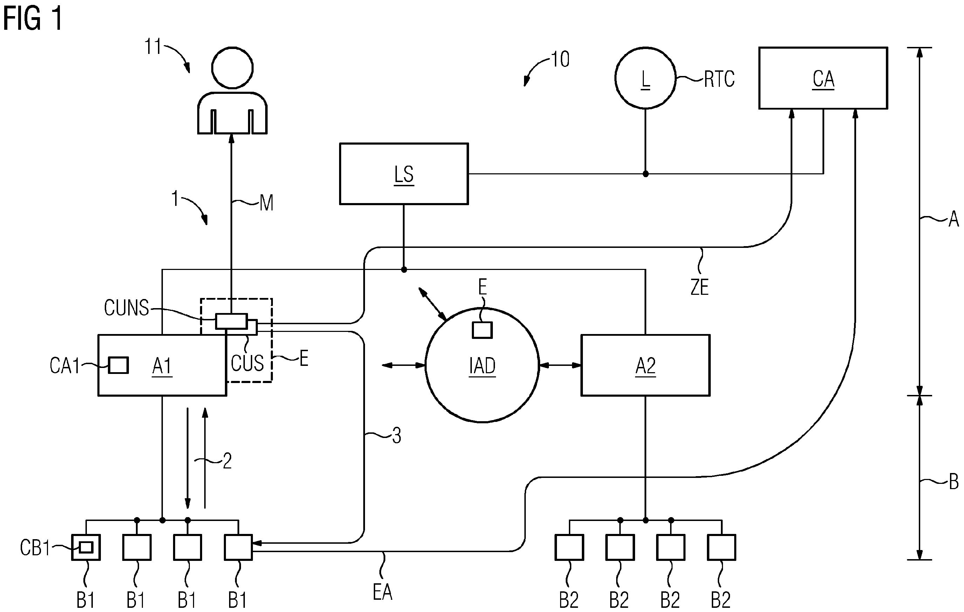

Gemäß FIG 1 ist ein System 10 mit einer Netzwerkinfrastruktur 1 zum Betrieb einer industriellen Anlage dargestellt. Eine derartige industrielle Anlage wird in der Regel von einem Netzbetreiber 11 oder einen Anlagenbetreiber beaufsichtigt. Die Netzwerkinfrastruktur 1 umfasst eine erste Klasse A von Netzwerkteilnehmern A1,A2 und eine zweite Klasse B von Netzwerkteilnehmern B1,B2. Die erste Klasse A von Netzwerkteilnehmern A1,A2 sind mit Mitteln für eine Zeitsynchronisierung zu einer Uhrzeit einer Uhr RTC ausgestaltet. Die zweite Klasse B von Netzwerkteilnehmern B1,B2 sind ohne diese Mittel für eine Zeitsynchronisierung ausgestaltet.

Die Netzwerkteilnehmer A1,B1 sind dabei ausgestaltet, mittels eines Protokolls TLS unter Verwendung von mit Zertifikaten CA1,CB1 einen sicheren Kommunikationsvorgang 2 aufzubauen, weiterhin sind sie ausgestaltet, die Gültigkeit eines Zertifikates CA1,CB1 zu prüfen.

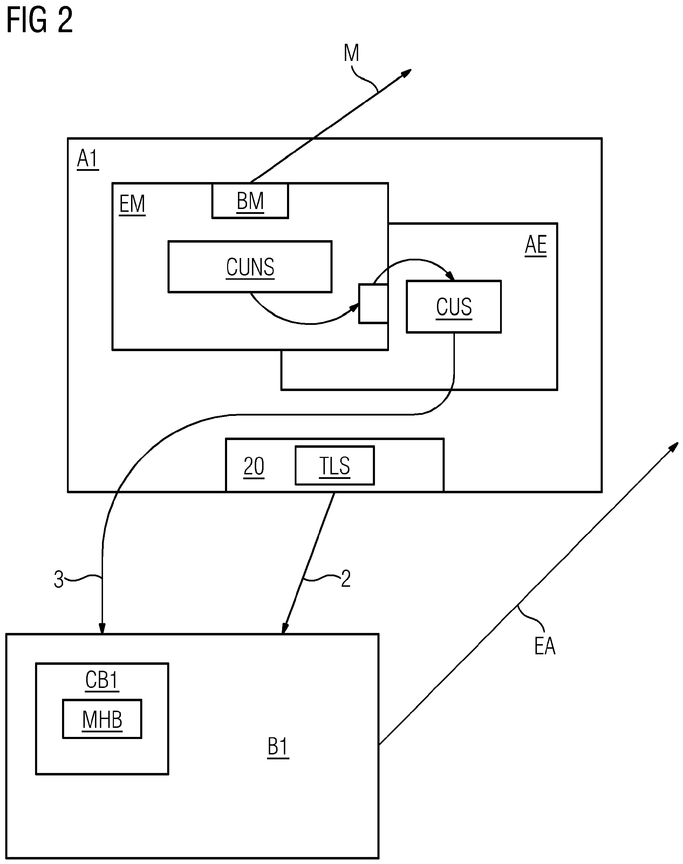

Die Netzwerkteilnehmer A1,A2 der ersten Klasse A weisen ein Erkennungsmittel EM (siehe auch FIG 2) auf. Das Erkennungsmittel EM ist ausgestaltet bei einem Kommunikationsvorgang 2 von einem Netzwerkteilnehmer der ersten Klasse A zu einem Netzwerkteilnehmer der zweiten Klasse B im Rahmen einer Validierung des Zertifikates für die sichere Datenübertragung einen Erkennungsschritt E durchzuführen, bei welchem für das Zertifikat CB1 des Netzwerkteilnehmers B1 der zweiten Klasse B erkannt wird, welche Restlaufzeit RLZ von einer ursprünglich aufgestellten Laufzeit MHB für das Zertifikat CB1 des Netzwerkteilnehmers B1 der zweiten Klasse B bezogen auf die Uhrzeit der Uhr RTC noch vorhanden ist.

Weiterhin sind die Netzwerkteilnehmer A1 der ersten Klasse A ausgestaltet, die ermittelte Restlaufzeit RLZ mit einem vorgebbaren Wert N zu vergleichen und für den Fall, dass der Vergleich ergibt, dass der vorgegebene Wert N erreicht ist, über ein Benachrichtigungsmittel BM eine Benachrichtigung M abzusetzen, welche dem Netzwerkbetreiber 11 über das baldige Ablaufen des Zertifikates CB1 informiert.

Auch ist es möglich, dass eine Zertifikatserneuerungs-Anfrage CE an eine Zertifizierungsstelle CA abgesetzt wird.

In dem ersten Netzwerkteilnehmer A1 der ersten Klasse A ist demnach ein erster Softwaredienst CUMS implementiert, welcher das baldige Ablaufen eines Zertifikates prüft. Weiterhin ist in dem ersten Netzwerkteilnehmer A1 der Klasse A ein zweiter Softwaredienst CUS implementiert, welcher ausgestaltet ist, von dem ersten Softwaredienst CUMS angetriggert zu werden und demnach an die Zertifizierungsstelle CA eine Zertifikatserneuerungs-Anfrage ZE abzusetzen.

Auch ist es denkbar in dem System 10 bzw. in der Netzinfrastruktur 1 ein Auffälligkeitsdetektions-Mittel IAD zu implementieren, in dem der Erkennungsschritt E ausgeführt wird oder sogar der erste und der zweite Softwaredienst CUMS,CUM implementiert sind.

Gemäß der FIG 2 ist der erste Netzwerkteilnehmer A1 der ersten Klasse A und der zweite Netzwerkteilnehmer B1 der zweiten Klasse B bei einem Kommunikationsvorgang 2 dargestellt. Der erste Netzwerkteilnehmer A1 der ersten Klasse A möchte über den Kommunikationsvorgang 2 mittels eines Verschlüsselungsprotokolls TLS mit Zertifikaten CA1, C1 eine sichere Datenübertragung aufbauen. Nun kann es passieren, dass bei solch einem Kommunikationsvorgang 2 das Zertifikat bereits abgelaufen ist. Was zu Kommunikationsproblemen oder Kommunikationsunterbrechungen führt und somit ein Normalbetrieb und die Verfügbarkeit einer industriellen Anlage gefährdet. Wird ein abgelaufenes TLS-Server-Zertifikat, beispielsweise beim Aufbau einer TLS-Session. on im Rahmen eines TLS-Handshakes zwischen den TLS-Server und einem TLS-Client verwendet, so stellt der TLS-Client bei der Validierung des TLS-Server-Zertifikats fest, dass das TLS-Server-Zertifikat abgelaufen ist und somit nicht mehr gültig ist. Daraufhin bricht der TLS-Client die Verbindung ab. Die Kommunikation kommt erst dann wieder zustande, wenn der TLS-Server ein neues gültiges Zertifikat ausgestellt bekommen hat. Dies kann u.U. einige Stunden/Tage in Anspruch nehmen. In einer industriellen, hochverfügbaren Anlage ist eine derartige Lösung nicht akzeptabel.

Darum ist erfindungsgemäß in den Netzwerkteilnehmern der ersten Klasse A zumindest der erste Softwaredienst CUMS implementiert, dieser macht eine Erkennung eines baldigen Ablaufs eines Zertifikates möglich. Diese Erkennung kann er dem zweiten Softwaredienst CUS signalisieren, welcher daraufhin an den Netzwerkteilnehmern B1 der zweiten Klasse B eine Aufforderung schickt, wobei diese Aufforderung bedeutet "Bitte besorge dir ein neues Zertifikat". Daraufhin kann der Netzwerkteilnehmer B1 der zweiten Klasse B einen Erneuerungsantrag EA an eine Zertifizierungsstelle CA senden.

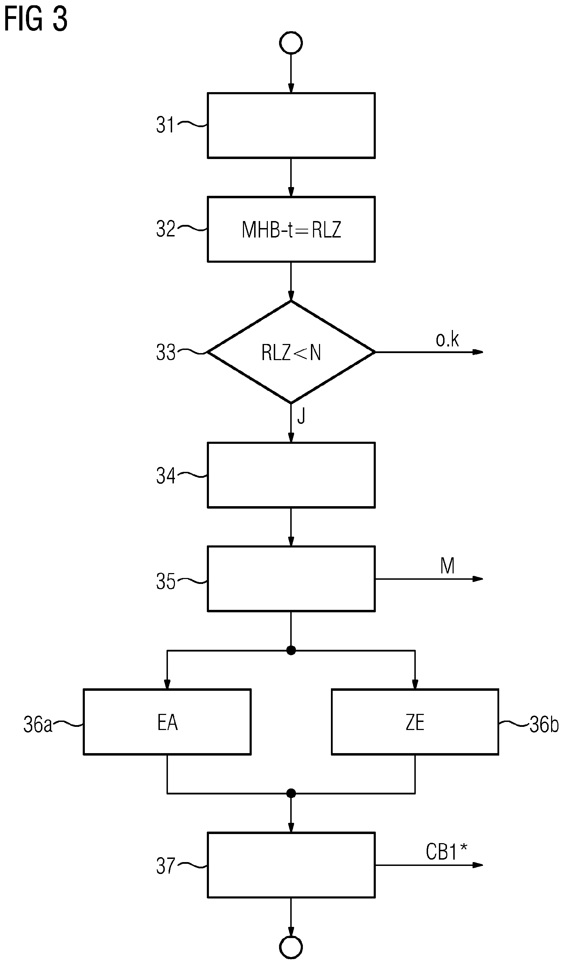

Mit der FIG 3 sollen die Verfahrensschritte noch einmal in einem Ablaufdiagramm dargestellt werden. In einem ersten Schritt 31 wird ein Kommunikationsvorgang zwischen den Netzwerkteilnehmern A1,B1 iniiziert. In einem zweiten Schritt 32 wird eine Restlaufzeit RLZ der für die Kommunikation benutzten Zertifikate CB1 geprüft. Die ursprüngliche Laufzeit des Certifikates CB1 wird von der MHB-aktuelle Uhrzeit T abgezogen somit ergibt sich die = Restlaufzeit RLZ. In einen Vergleichsschritt 33 wird geprüft, ob die Restlaufzeit RLZ kleiner als ein vorgegebener Wert N (in Tagen) ist, sollte dies der Fall sein, so wird in einem dritten Schritt 34 bekannt gemacht, dass das Zertifikat bald ungültig ist und in N-Tagen abläuft.

In einem fünften Schritt 35 kann eine entsprechende Benachrichtigung M abgesetzt werden. Ein sechster Schritt 36a sieht vor, einen Erneuerungsantrag EA abzusetzen, wobei ein paralleler sechster Schritt 36b vorsieht, direkt zu der Zertifizierungsstelle ZA eine Zertifikatserneuerungs-Anfrage ZE zu senden. In einem siebten Schritt 37 wird, beispielsweise über die Zertifizierungsstelle ZA ein neues Zertifikat CB1* ausgestellt und an dem Netzwerkteilnehmer B1 der zweiten Klasse B übermittelt.

## Patentansprüche

1. Verfahren zur Optimierung einer Zertifikatsverwaltung in einer Netzwerkinfrastruktur (1) mit einer ersten Klasse (A) von Netzwerkteilnehmern (A1) und einer zweiten Klasse (B) von Netzwerkteilnehmern (B1), wobei
- die erste Klasse (A) von Netzwerkteilnehmern (A1) mit einer Zeitsynchronisierung zu einer Uhrzeit einer Uhr (RTC) und die zweite Klasse (B) von Netzwerkteilnehmern (B1) ohne eine Zeitsynchronisierung betrieben werden, wobei weiterhin
- zwischen den Netzwerkteilnehmern (A1,B1) mittels eines Protokolls (TLS) unter Verwendung von Zertifikaten (CA1,CB1) zur sicheren Datenübertragung kommuniziert wird, und dabei auch die Gültigkeit eines Zertifikates (CA1,CB1) geprüft wird,
**dadurch gekennzeichnet, dass** bei einen Kommunikationsvorgang (2) zwischen einem Netzwerkteilnehmer (A1) der ersten Klasse (A) zu einem Netzwerkteilnehmer (B1) der zweiten Klasse (B) im Rahmen einer Validierung des Zertifikates für die sichere Datenübertragung
- ein Erkennungsschritt (E) durchgeführt wird, bei welchem für das Zertifikat (CB1) des Netzwerkteilnehmers (B1) der zweiten Klasse (B) erkannt wird, welche Restlaufzeit (RLZ) von einer ursprünglich ausgestellten Laufzeit (MHB) für das Zertifikat (CB1) des Netzwerkteilnehmers (B1) der zweiten Klasse (B) bezogen auf die Uhrzeit der Uhr (RTC) noch vorhanden ist, die ermittelte Restlaufzeit (RLZ) wird mit einem vorgebbaren Wert (N) verglichen, und sollte der Vergleich ergeben, dass der vorgegebene Wert (N) erreicht ist, wird in einem weiteren Schritt
- eine Benachrichtigung (M) abgesetzt, welche einen Netzbetreiber (11) über das baldige Ablaufen des Zertifikates (CB1) informiert, oder eine Zertifikatserneuerungsanfrage (ZE) an eine Zertifizierungsstelle (CA) abgesetzt wird.

2. Verfahren nach Anspruch 1, wobei die Netzwerkinfrastruktur (1) als ein industrielles Kommunikationsnetz zwischen Automatisierungskomponenten betrieben wird.

3. Verfahren nach Anspruch 1 oder 2, wobei der Erkennungsschritt (E) als ein erster Softwaredienst (CUNS) auf den Netzwerkteilnehmer (A1) der ersten Klasse (A) betrieben wird.

4. Verfahren nach einem der Ansprüche 1 bis 3, wobei ein Auffälligkeitsdetektions-Mittel (IAD) betrieben wird, in dem der Erkennungsschritt (EA) ausgeführt wird.

5. Verfahren nach Anspruch 3 oder 4, wobei die Zertifikatserneuerungsanfrage (E) als ein zweiter Softwaredienst (CUS) durch den ersten Softwaredienst (CUNS) angestoßen wird, wobei der zweite Softwaredienst (CUNS) den Netzwerkteilnehmer (B1) der zweiten Klasse (B) auffordert einen Erneuerungsantrag (EA) an die Zertifizierungsstelle (CA) zu stellen.

6. Verfahren nach einem der Ansprüche 1 bis 5, wobei eine vorausschauende Zertifikatserneuerung durchgeführt wird und damit ein automatisiertes Zertifikatsmanagement ohne zusätzliche Kommunikationsvorgänge durchgeführt wird.

7. System (10) umfassend
eine Netzwerkinfrastruktur (1) mit einer ersten Klasse (A) von Netzwerkteilnehmern (A1) und einer zweiten Klasse (B) von Netzwerkteilnehmern (B1), wobei
- die erste Klasse (A) von Netzwerkteilnehmern (A1) mit Mitteln für eine Zeitsynchronisierung zu einer Uhrzeit einer Uhr (RTC) und die zweite Klasse (B) von Netzwerkteilnehmern (B1) ohne Mittel für eine Zeitsynchronisierung ausgestaltet sind, wobei die
- Netzwerkteilnehmer (A1,B1) ausgestaltet sind, mittels eines Protokolls (TLS) unter Verwendung von Zertifikaten (CA1,CB1) einen sicheren Kommunikationsvorgang (2) aufzubauen, weiterhin ausgestaltet auch die Gültigkeit eines Zertifikates (CA1,CB1) zu prüfen,
**dadurch gekennzeichnet, dass** die Netzwerkteilnehmer (A1) der ersten Klasse (A) ein ErkennungsMittel (EM) aufweisen, welches ausgestaltet ist bei einem Kommunikationsvorgang zu einem Netzwerteilnehmer (B1) der zweiten Klasse (B) im Rahmen einer Validierung des Zertifikates für die sichere Datenübertragung
- einen Erkennungsschritt (E) durchzuführen, bei welchem für das Zertifikat (CB1) des Netzwerkteilnehmers (B1) der zweiten Klasse (B) erkannt wird, welche Restlaufzeit (RLZ) von einer ursprünglich ausgestellten Laufzeit (MHB) für das Zertifikat (CB1) des Netzwerkteilnehmers (B1) der zweiten Klasse (B) bezogen auf die Uhrzeit der Uhr (RTC) noch vorhanden ist, weiterhin ausgestaltet die ermittelte Restlaufzeit (RLZ) mit einem vorgebbaren Wert (N) zu vergleichen und für den Fall, dass der Vergleich ergibt, das der vorgegebene Wert (N) erreicht ist, ist ein
- Benachrichtigung-Mittel (BM) vorhanden, welches ausgestaltet ist eine Benachrichtigung (M) abzusetzen, welche einen Netzbetreiber (11) über das baldige Ablaufen des Zertifikates (CB1) informiert, oder eine Zertifikatserneuerungsanfrage (E) an eine Zertifizierungsstelle (CA) abgesetzt.

8. System (10) nach Anspruch 7, wobei die Netzwerkinfrastruktur (1) als ein industrielles Kommunikationsnetz zwischen Automatisierungskomponenten ausgestaltet ist.

9. System (10) nach Anspruch 7 oder 8, wobei das ErkennungsMittel (EM) als ein erster Softwaredienst (CUNS) ausgestaltet ist und auf dem Netzwerkteilnehmer (A1) der ersten Klasse (A) implementiert ist.

10. System (10) nach einem der Ansprüche 7 bis 9 mit einem Auffälligkeitsdetektions-Mittel (IAD) ausgestaltet den Erkennungsschritt (E) auszuführen.

11. System (10) nach einem der Ansprüche 9 oder 10, wobei ein Anfragemittel (AE) vorhanden ist, welches als ein zweiter Softwaredienst (CUS) ausgestaltet ist und eine Schnittstelle zu dem ersten Softwaredienst (CUNS) aufweist, weiterhin ausgestaltet den Netzwerkteilnehmer (B1) der zweiten Klasse (B) aufzufordern einen Erneuerungsantrag (EA) an die Zertifizierungsstelle (CA) zu stellen.
